# EUROPEAN PATENT APPLICATION

(11) **EP 2 536 042 A1**
(43) Date of publication of application: **19.12.2012**
(21) Application number: 11860706.8
(22) Date of filing: 09.12.2011
(51) Int. Cl.: H04B 17/00

(54) **CHANNEL MEASUREMENT SYSTEM, METHOD AND DEVICE**

(30) Priority: 31.03.2011 CN 201110079883
(71) Applicant: Huawei Technologies Co., Ltd., Shenzhen, Guangdong 518129 (CN)
(72) Inventor: LI, Xin, Shenzhen Guangdong 518129 (CN); LU, Xiaofeng, Shenzhen Guangdong 518129 (CN)
(74) Representative: Kreuz, Georg Maria
(86) International application number: PCT/CN2011/083749
(87) International publication number: WO 2012/129931

(57) **Abstract**

The present invention provides a channel measurement system, method, and device. The system includes: a signal collecting device, configured to collect a first signal according to a preset sampling rate, and obtain a second signal, where the first signal is a signal sent by a transmitter without passing through a channel and includes a service signal and a pilot signal; a receiver with measuring function, configured to collect a third signal according to the sampling rate synchronously when the signal collecting device collects the first signal, and obtain a fourth signal, where the third signal is a signal obtained after the first signal passes through the channel; and a channel measuring and processing device, configured to process the second signal and the fourth signal, and obtain a response of the channel. With the channel measurement system, method, and device of the present invention, the channel measurement accuracy is improved without any impact on the operation of a legacy network.

## Description

### FIELD OF THE INVENTION

Embodiments of the present invention relate to communication technologies, and in particular, to a channel measurement system, method, and device.

### BACKGROUND OF THE INVENTION

All paths that a signal passes through after the signal is sent by a transmitter and before the signal reaches a receiver are called channels. If a radio signal is transmitted, paths that an electromagnetic wave passes through are called radio channels. At present, there are various radio channel scenarios. That is, even if base stations (that is, the transmitters) are configured with a same algorithm in different channel scenarios, the configuration performance of the base stations differs greatly. Therefore, it is very important to describe the scenario features of different channels by types. However, this requires a large quantity of channel measurements in different scenarios in the sense of statistics.

In the prior art, a worldwide interoperability for microwave access (Worldwide Interoperability for Microwave Access, WiMAX) data collection card is used to measure channels. Specifically, a WiMAX data collection card is set between an indoor base band unit (Building Base band Unit, BBU) and a radio remote unit (Radio Remote Unit, RRU) at the base station side and at a receiver with measuring function (that is, a receiver) respectively. When a channel measurement is performed, the base station and the receiver with measuring function need to work in measurement mode, that is, the base station sends pilot signals at the whole frequency band. In this way, the WiMAX data collection card set at the base station side collects pilot signals received by the RRU at the base station side, where the pilot signals are equivalent to the copies of the pilot signals received by the RRU; the WiMAX data collection card set at the receiver with measuring function collects pilot signals received by receive antennas, and then the collected pilot signals are analyzed and processed. Thereby, the channel measurement is implemented.

In the process of implementing the present invention, the inventor discovers that the prior art has at least following problems: The WiMAX data collection card can only be applied in test mode, that is, after the channel measurement is started, the normal working state of the base station must be terminated; in addition, at the receiver with measuring function, because signals received at the same antenna are collected by radix-4 decimation in frequency and the WiMAX data collection card can only collect pilot signals and perform a channel measurement on the pilot signals, the accuracy of the channel measurement is relatively low.

### SUMMARY OF THE INVENTION

Embodiments of the present invention provide a channel measurement system, method, and device to improve the channel measurement accuracy without any impact on the operation of a legacy network.

An embodiment of the present invention provides a channel measurement system, including:
a signal collecting device, configured to collect a first signal according to a preset sampling rate, and obtain a second signal, where the first signal is a signal sent by a transmitter without passing through a channel and includes a service signal and a pilot signal;
a receiver with measuring function, configured to collect a third signal according to the sampling rate synchronously when the signal collecting device collects the first signal, and obtain a fourth signal, where the third signal is a signal obtained after the first signal passes through the channel; and
a channel measuring and processing device, configured to process the obtained second signal and the fourth signal, and obtain a response of the channel.

An embodiment of the present invention provides a channel measurement method, including:
collecting a first signal according to a preset sampling rate, and obtaining a second signal, where the first signal is a signal sent by a transmitter without passing through a channel and the first signal includes a service signal and a pilot signal;
collecting a third signal according to the sampling rate synchronously when collecting the first signal, and obtaining a fourth signal, where the third signal is a signal obtained after the first signal passes through the channel; and
processing the second signal and the fourth signal, and obtaining a response of the channel.

An embodiment of the present invention further provides a channel measurement method, including:
obtaining a second signal, where the second signal is obtained by a signal collecting device by collecting, according to a preset sampling rate, a first signal sent by a transmitter;
obtaining a fourth signal, where the fourth signal is obtained by a receiver with measuring function by collecting a third signal according to the sampling rate synchronously when the signal collecting device collects the first signal, where the third signal is a signal obtained after the first signal passes through the channel; and
processing the second signal and the fourth signal, and obtaining a response of the channel.

An embodiment of the present invention provides a channel measuring and processing device, including:
a first obtaining module, configured to obtain a second signal, where the second signal is obtained by a signal collecting device by collecting, according to a preset sampling rate, a first signal sent by a transmitter;
a second obtaining module, configured to obtain a fourth signal, where the fourth signal is obtained by a receiver with measuring function by collecting a third signal according to the sampling rate synchronously when the signal collecting device collects the first signal, where the third signal is a signal obtained after the first signal passes through the channel; and
a signal processing module, configured to process the second signal and the fourth signal, and obtain a response of the channel.

According to the channel measurement system, method, and device provided in embodiments of the present invention, the signal collecting device collects a first signal according to a preset sampling rate, and obtains a second signal, where the first signal is a signal sent by a transmitter without passing through a channel and the first signal includes a service signal and a pilot signal; the receiver with measuring function collects a third signal according to the sampling rate synchronously when the signal collecting device collects the first signal, and obtains a fourth signal, where the third signal is a signal obtained after the first signal passes through the channel; the channel measuring and processing device processes the second signal and the fourth signal, and obtains a response of the channel. The first signal and the third signal collected by the signal collecting device and the receiver with measuring function include the service signal and the pilot signal, that is, the service signal and the pilot signal are considered in the channel measurement, and the time interval for service signals is relatively short. Therefore, the channel time feature accuracy is greatly improved, and the channel measurement accuracy is effectively improved without any impact on the legacy network.

### BRIEF DESCRIPTION OF THE DRAWINGS

To make the technical solutions in the embodiments of the present invention or in the prior art clearer, the accompanying drawings for illustrating the embodiments of the present invention or the prior art are briefly described hereunder. Apparently, the accompanying drawings are exemplary only, and persons skilled in the art can derive other drawings from such accompanying drawings without creative efforts.

FIG. 1 is a schematic structural diagram of an embodiment of a channel measurement system according to the present invention;

FIG. 2 is a schematic structural diagram of another embodiment of a channel measurement system according to the present invention;

FIG. 3 is a schematic structural diagram of still another embodiment of a channel measurement system according to the present invention;

FIG. 4 is a flowchart of an embodiment of a channel measurement method according to the present invention;

FIG. 5 is a flowchart of another embodiment of a channel measurement method according to the present invention; and

FIG. 6 is a schematic structural diagram of an embodiment of a channel measuring and processing device according to the present invention.

### DETAILED DESCRIPTION OF THE EMBODIMENTS

For a better understanding of the objective, technical solutions, and advantages of the embodiments of the present invention, the technical solutions provided in the embodiments of the present invention are hereinafter described in detail with reference to the accompanying drawings. Evidently, the embodiments are only exemplary embodiments of the present invention and the present invention is not limited to such embodiments. All other embodiments that persons skilled in the art obtain based on embodiments of the present invention without any creative effort also fall within the protection scope of the present invention.

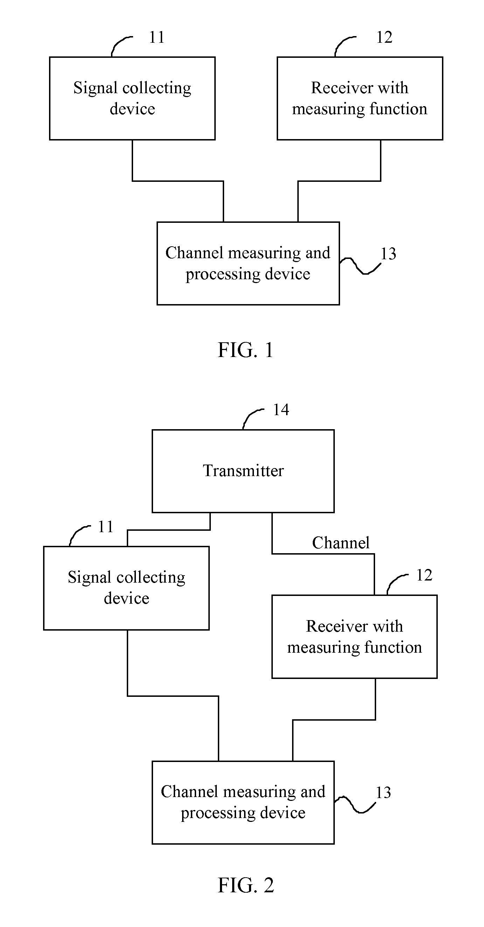

FIG. 1 is a schematic structural diagram of an embodiment of a channel measurement system according to the present invention. As shown in FIG. 1, the channel measurement system provided in this embodiment includes a signal collecting device 11, a receiver with measuring function 12, and a channel measuring and processing device 13. The signal collecting device 11 is configured to collect a first signal according to a preset sampling rate, and obtain a second signal, where the first signal is a signal sent by a transmitter without passing through a channel and the first signal includes a service signal and a pilot signal. The receiver with measuring function 12 is configured to collect a third signal according to the sampling rate synchronously when the signal collecting device 11 collects the first signal, and obtain a fourth signal, where the third signal is a signal obtained after the first signal passes through the channel. The channel measuring and processing device 13 is configured to process the second signal and the fourth signal, and obtain a response of the channel.

In this embodiment, the transmitter may be a base station. The signal collecting device 11 collects a signal sent by the transmitter without passing through a channel, and uses the signal as a first signal and stores the signal, where the first signal includes a service signal and a pilot signal, and the device performs sampling processing on the first signal according to a preset sampling rate; the receiver with measuring function 12 collects a third signal according to the sampling rate synchronously when the signal collecting device 11 collects the first signal, and obtains and stores a fourth signal, where the third signal is a signal obtained after the first signal passes through the channel. It should be noted that the signal collecting device 11 and the receiver with measuring function 12 may set a high sampling rate, that is, they use high sampling bandwidth to collect received signals at the high sampling rate. In this way, the delay accuracy of the channel is effectively improved. For example, the high sampling rate may be several times the carrier frequency at a radio frequency, such as 6 GHz, 5 GHz, and 7 GHz, or several times the baseband signal bandwidth used by the signal collecting device 11 and the receiver with measuring function 12 after they convert the frequency of the received signal to the baseband, such as 100 MHz. It should be noted that the range of the high sampling rate or the sampling value is not limited in this embodiment and can be set freely by those skilled in the art according to the actual need.

In addition, because the signal collecting device 11 and the receiver with measuring function 12 may receive a pilot signal and a service signal, that is, a second signal and a third signal obtained by the channel measuring and processing device 13 also include a pilot signal and a service signal. Specifically, the second signal is used as the first signal sent by the air interface of the transmitter, in which the second signal is similar to the "pilot signal", and a related operation and channel estimation are performed on the second signal and the fourth signal to obtain the response of the channel. Specifically, the response of the channel should be an impulse response of the communication channel. In this way, when the channel measuring and processing device 13 performs the foregoing processing, the pilot signal and service signal are considered, which effectively improves the time accuracy of the channel.

In this embodiment, the signal collecting device collects a first signal according to a preset sampling rate, and obtains a second signal, where the first signal is a signal sent by a transmitter without passing through a channel and the first signal includes a service signal and a pilot signal; the receiver with measuring function collects a third signal according to the sampling rate synchronously when the signal collecting device collects the first signal, and obtains a fourth signal, where the third signal is a signal obtained after the first signal passes through the channel; the channel measuring and processing device processes the second signal and the fourth signal, and obtains a response of the channel. The first signal and the third signal collected by the signal collecting device and the receiver with measuring function include the service signal and the pilot signal, that is, the service signal and the pilot signal are considered in the channel measurement, and the time interval for service signals is relatively short. Therefore, the channel time feature accuracy is greatly improved, and the channel measurement accuracy is effectively improved without any impact on the legacy network.

FIG. 2 is a schematic structural diagram of another embodiment of a channel measurement system according to the present invention. As shown in FIG. 2, on the basis of the embodiment shown in FIG. 1, the system further includes a transmitter 14 configured to send a first signal after synchronizing with a signal collecting device 11 and a receiver with measuring function 12.

Specifically, before the transmitter 14 begins to send the first signal, synchronization between the transmitter 14, the signal collecting device 11, and the receiver with measuring function 12 needs to be performed, for example, by using a global positioning system (Global Position System, GPS).

In this embodiment, when the transmitter 14 sends the first signal continuously, a synchronization means may be used to synchronize the signal collecting device 11 with the receiver with measuring function 12, that is, the transmitter 14 sends a notification signal to a GPS satellite, so that the GPS satellite triggers, according to the notification signal, the transmitter 14 to synchronize with the signal collecting device 11 and the receiver with measuring function 12. In this way, the signal collecting device 11 and the receiver with measuring function 12 may receive signals under a same clock signal. Specifically, the signal collecting device 11 may be configured to collect the first signal according to a preset sampling rate synchronously when the transmitter 14 sends the first signal. Because the receiver with measuring function 12 and the signal collecting device 11 are synchronized with each other, the receiver with measuring function 12 also receives the first signal passing through the channel synchronously when the transmitter 14 sends the first signal (that is, when the signal collecting device 11 collects the first signal).

In addition, in this embodiment, the signal collecting device 11 may be arranged outside the transmitter 14. Specifically, by using a reference antenna (for example, a single antenna) set on the signal collecting device 11, the signal collecting device 11 may collect the first signal sent by the transmitter without passing through the channel. In addition, the preset distance is smaller than the half wavelength of the first signal corresponding to the antenna of the transmitter 14. In this way, it may be guaranteed that the first signal without passing through the channel collected by the signal collecting device 11 has a strong correlation with the first signal sent by the air interface of the transmitter 14.

Further, the receive antenna of the receiver with measuring function 12 may be a multi-antenna array, which greatly improves the channel estimation accuracy and effectively improves the accuracy of the channel space. In addition, the receive antenna of the receiver with measuring function 12 may be a single antenna.

In another embodiment, if the receiver and the transmitter are synchronized with each other, an absolute delay (that is, a duration between the time when an electromagnetic wave is sent from the transmitter and the time when the electromagnetic wave reaches the receiver) may be known accurately. Therefore. the signal collecting device 11 is synchronized with the receiver with measuring function 12 before a signal is sent. Similarly, if the absolute delay of the signal is known, the signal collecting device 11 may also be synchronized with the receiver with measuring function 12 within a period of time after the signal is sent.

In this embodiment, the signal collecting device is arranged at a preset distance from the transmitter. In this way, the normal operation of a legacy base station is not affected, that is, the legacy base station does not need to be set to a dedicated test mode. In addition, the signal collecting device and the receiver with measuring function sample received signals by using a preset high sampling rate, which effectively improves the delay accuracy of the channel. Furthermore, the signal collecting device and the receiver with measuring function do not differentiate the pilot signal and the service signal, that is, they sample both the received pilot signal and the service signal. Therefore, compared with the prior art where the channel measurement is based on the pilot signal, the channel measurement system provided by the present invention greatly improves the accuracy in the time domain and the frequency domain.

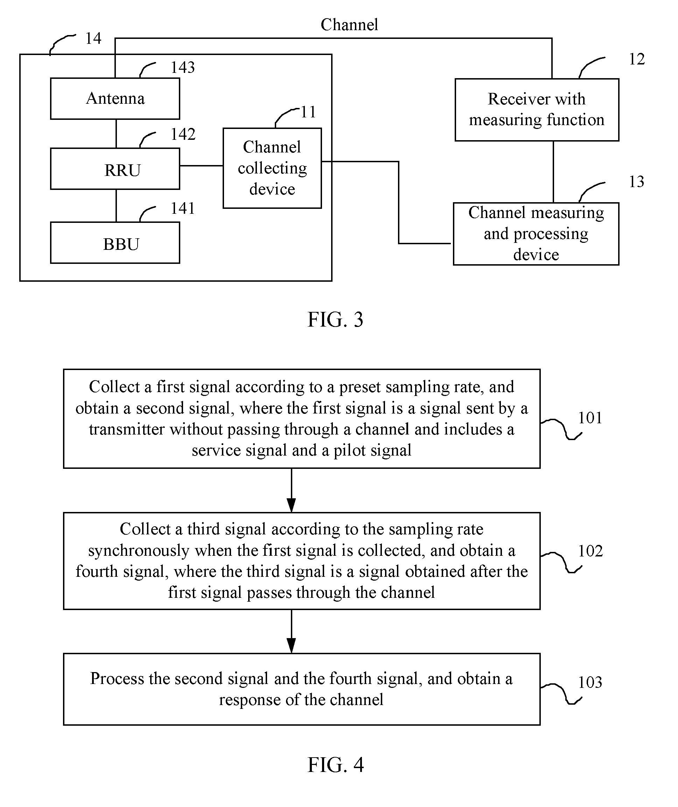

FIG. 3 is a schematic structural diagram of still another embodiment of a channel measurement system according to the present invention. On the basis of the embodiment shown in FIG. 1, as shown in FIG. 3, the system further includes a transmitter 14 configured to send a first signal after synchronizing with a signal collecting device 11 and a receiver with measuring function 12.

The technical solution of this embodiment is described in detail based on the assumption that the transmitter 14 is a base station and includes a BBU 141, an RRU 142, and an antenna 143. Specifically, the signal collecting device 11 may be arranged inside the base station. That is, the signal collecting device 11 is connected to the RRU 142 inside the base station. In addition, because the BBU 141 may include a communication algorithm, the signal collecting device 11 may be arranged after the RRU 142 inside the base station, that is, after the RRU 142 processes the first signal received from the BBU 141, the processed first signal is sent to the signal collecting device 11.

Further, the receive antenna of the receiver with measuring function 12 may be a multi-antenna array, which greatly improves the channel estimation accuracy and effectively improves the accuracy of the channel space.

In this embodiment, a signal collecting device is arranged inside the transmitter. In this way, the normal operation of the legacy base station is not affected, that is, the legacy base station does not need to be set to a dedicated test mode. In addition, the signal collecting device and the receiver with measuring function sample received signals by using a preset high sampling rate, which effectively improves the delay accuracy of a channel. Furthermore, the signal collecting device and the receiver with measuring function do not differentiate a pilot signal and a service signal, that is, they sample both a received pilot signal and a received service signal. Therefore, compared with the prior art where the channel measurement is based on the pilot signal, the channel measurement system provided by the present invention greatly improves the accuracy in the time domain and the frequency domain.

FIG. 4 is a flowchart of an embodiment of a channel measurement method of the present invention. As shown in FIG. 4, this embodiment is executed by a channel measurement system, and the method includes the following steps:

Step 101: Collect a first signal according to a preset sampling rate, and obtain a second signal, where the first signal is a signal sent by a transmitter without passing through a channel and the first signal includes a service signal and a pilot signal.

Step 102: Collect a third signal according to the sampling rate synchronously when the first signal is collected, and obtain a fourth signal, where the third signal is a signal obtained after the first signal passes through the channel.

Step 103: Process the second signal and the fourth signal, and obtain a response of the channel.

In this embodiment, the system collects a first signal according to a preset sampling rate, and obtains a second signal, where the first signal is a signal sent by a transmitter without passing through a channel and the first signal includes a service signal and a pilot signal; the system collects a third signal according to the sampling rate synchronously when collecting the first signal, and obtains a fourth signal, where the third signal is a signal obtained after the first signal passes through the channel; the system processes the second signal and the fourth signal, and obtains a response of the channel. The first signal and the third signal collected by a signal collecting device and a receiver with measuring function include the service signal and the pilot signal, that is, the service signal and the pilot signal are considered in channel measurement, and the time interval for service signals is relatively short. Therefore, the channel time feature accuracy is greatly improved, and the channel measurement accuracy is effectively improved without any impact on the legacy network.

Further, in another embodiment of the present invention, on the basis of the embodiment of the method shown in FIG. 4, in step 101, collecting the first signal includes:
when the transmitter sends the first signal, collecting the first signal synchronously.

Further, in another embodiment of the present invention, on the basis of the embodiment of the method shown in FIG. 4, step 103 includes:
performing a related operation and channel estimation processing on the second signal and the fourth signal, and obtaining an impulse response of the channel.

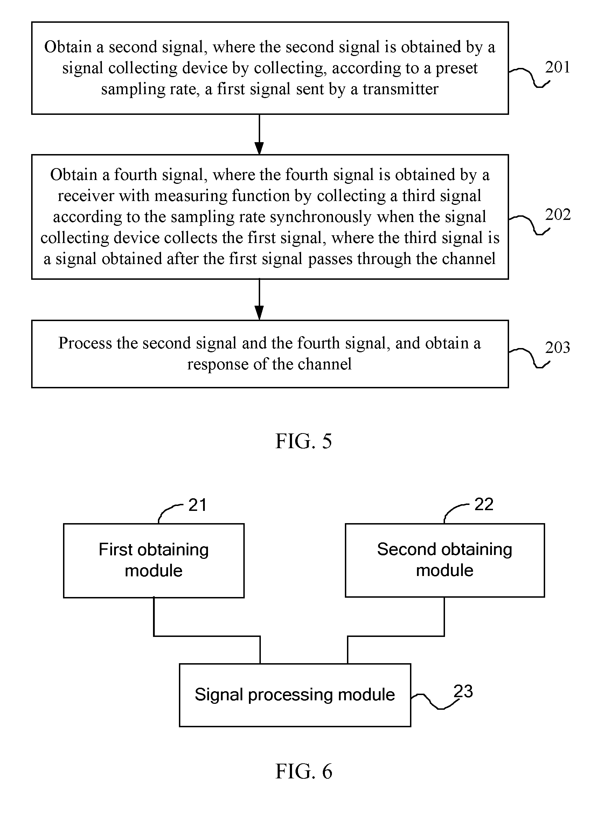

FIG. 5 is a flowchart of another embodiment of a channel measurement method according to the present invention. As shown in FIG. 5, the method includes the following steps:

Step 201: Obtain a second signal, where the second signal is obtained by a signal collecting device by collecting, according to a preset sampling rate, a first signal sent by a transmitter.

As described above, in an embodiment, the second signal is obtained by the signal collecting device by collecting, according to the preset sampling rate, synchronously when the transmitter sends the first signal.

Step 202: Obtain a fourth signal, where the fourth signal is obtained by a receiver with measuring function by collecting a third signal according to the sampling rate synchronously when the signal collecting device collects the first signal, where the third signal is a signal obtained after the first signal passes through the channel.

Step 203: Process the second signal and the fourth signal, and obtain a response of the channel.

In this embodiment, the signal collecting device may be arranged inside the transmitter, for example, it is arranged inside a base station and connected to an RRU inside the base station, or arranged outside the transmitter according to a preset distance. The distance from a receive antenna of the signal collecting device to the antenna of the transmitter is smaller than the half wavelength of the first signal corresponding to the antenna of the transmitter. The distance from the receive antenna of the signal collecting device to the antenna of the transmitter is the preset distance. It should be noted that no matter where the signal collecting device is arranged, the receiving and sampling principles are the same.

In this embodiment, a second signal and a fourth signal are obtained, where the second signal is obtained by the signal collecting device by collecting, according to a preset sampling rate, the first signal sent by the transmitter and the fourth signal is obtained by the receiver with measuring function by collecting a third signal according to the sampling rate synchronously when the signal collecting device collects the first signal; the third signal is a signal obtained after the first signal passes through the channel; the second signal and the fourth signal are processed, and a response of the channel is obtained. The first signal and the third signal collected by the signal collecting device and the receiver with measuring function include a service signal and a pilot signal, that is, the service signal and the pilot signal are considered in the channel measurement, and the time interval for service signals is relatively short. Therefore, the channel time feature accuracy is greatly improved, and the channel measurement accuracy is effectively improved without any impact on the legacy network.

FIG. 6 is a schematic structural diagram of an embodiment of a channel measuring and processing device according to the present invention. As shown in FIG. 6, the channel measuring and processing device includes a first obtaining module 21, a second obtaining module 22, and a signal processing module 23. The first obtaining module 21 is configured to obtain a second signal, where the second signal is obtained by a signal collecting device by collecting, according to a preset sampling rate, a first signal sent by a transmitter. The second obtaining module 22 is configured to obtain a fourth signal, where the fourth signal is obtained by a receiver with measuring function by collecting a third signal according to the sampling rate synchronously when the signal collecting device collects the first signal, where the third signal is a signal obtained after the first signal passes through the channel. The signal processing module 23 is configured to process the second signal and the fourth signal, and obtain a response of the channel.

The channel measuring and processing device provided in this embodiment may execute the technical solution of the method provided in the embodiment shown in FIG. 5. The implementation principles are similar, and are not further described.

In this embodiment, the device obtains a second signal and a fourth signal, where the second signal is obtained by the signal collecting device by collecting, according to a preset sampling rate, a first signal sent by the transmitter and the fourth signal is obtained by the receiver with measuring function by collecting a third signal according to the sampling rate synchronously when the signal collecting device collects the first signal; the third signal is a signal obtained after the first signal passes through the channel; the device processes the second signal and the fourth signal, and obtains a response of the channel. The first signal and the third signal collected by the signal collecting device and the receiver with measuring function include a service signal and a pilot signal, that is, the service signal and the pilot signal are considered in the channel measurement, and the time interval for service signals is relatively short. Therefore, the channel time feature accuracy is greatly improved, and the channel measurement accuracy is effectively improved without any impact on the legacy network.

Persons skilled in the art may understand that all or part of the steps of the method according to the embodiments may be implemented by a program instructing relevant hardware. The program may be stored in a computer readable storage medium. When the program runs, the steps of the method according to the embodiments are performed. The storage medium may be any medium capable of storing program codes, such as a ROM, a RAM, a magnetic disk, or a CD-ROM.

It should be noted that the above embodiments are merely provided for describing the technical solutions of the present invention, but not intended to limit the present invention. Although the present invention has been described in detail with reference to the foregoing embodiments, it is apparent that persons skilled in the art can make various modifications and variations to the invention without departing from the spirit and scope of the invention. The invention shall cover the modifications and variations provided that they fall within the scope of protection defined by the following claims or equivalents of the claims.

## Claims

1. A channel measurement system, comprising:
a signal collecting device, configured to collect a first signal according to a preset sampling rate, and obtain a second signal, wherein the first signal is a signal sent by a transmitter without passing through a channel and the first signal comprises a service signal and a pilot signal;
a receiver with measuring function, configured to collect a third signal according to the sampling rate synchronously when the signal collecting device collects the first signal, and obtain a fourth signal, wherein the third signal is a signal obtained after the first signal passes through the channel; and
a channel measuring and processing device, configured to process the second signal and the fourth signal, and obtain a response of the channel.

2. The channel measurement system according to claim 1, wherein the signal collecting device is specifically configured to collect the first signal according to the preset sampling rate synchronously when the transmitter sends the first signal.

3. The channel measurement system according to claim 2, wherein the signal collecting device is arranged outside the transmitter according to a preset distance.

4. The channel measurement system according to claim 3, wherein the preset distance is smaller than a half wavelength of the first signal corresponding to an antenna of the transmitter.

5. The channel measurement system according to claim 2, wherein the signal collecting device is arranged inside the transmitter.

6. The channel measurement system according to any one of claims 3 to 5, wherein an antenna of the receiver with measuring function is a multi-antenna array or a single antenna.

7. The channel measurement system according to claim 1, wherein the channel measuring device is configured to perform a related operation and channel estimation processing on the second signal and the fourth signal, and obtain an impulse response of the channel.

8. A channel measurement method, comprising:
collecting a first signal according to a preset sampling rate, and obtaining a second signal, wherein the first signal is a signal sent by a transmitter without passing through a channel and the first signal comprises a service signal and a pilot signal;
collecting a third signal according to the sampling rate synchronously when collecting the first signal, and obtaining a fourth signal, wherein the third signal is a signal obtained after the first signal passes through the channel; and
processing the second signal and the fourth signal, and obtaining a response of the channel.

9. The channel measurement method according to claim 8, wherein the collecting a first signal comprises:
when the transmitter sends the first signal, collecting the first signal synchronously.

10. The channel measurement method according to claim 8, wherein the processing the second signal and the fourth signal and obtaining a response of the channel comprise: performing a related operation and channel estimation processing on the second signal and the fourth signal, and obtaining an impulse response of the channel.

11. A channel measurement method, comprising:
obtaining a second signal, wherein the second signal is obtained by a signal collecting device by collecting, according to a preset sampling rate, a first signal sent by a transmitter;
obtaining a fourth signal, wherein the fourth signal is obtained by a receiver with measuring function by collecting a third signal according to the sampling rate synchronously when the signal collecting device collects the first signal, wherein the third signal is a signal obtained after the first signal passes through the channel; and
processing the second signal and the fourth signal, and obtaining a response of the channel.

12. The channel measurement method according to claim 11, wherein the second signal is obtained by the signal collecting device by collecting the first signal according to the preset sampling rate synchronously when the transmitter sends the first signal.

13. A channel measuring and processing device, comprising:
a first obtaining module, configured to obtain a second signal, wherein the second signal is obtained by a signal collecting device by collecting, according to a preset sampling rate, a first signal sent by a transmitter;
a second obtaining module, configured to obtain a fourth signal, wherein the fourth signal is obtained by a receiver with measuring function by collecting a third signal according to the sampling rate synchronously when the signal collecting device collects the first signal, wherein the third signal is a signal obtained after the first signal passes through the channel; and
a signal processing module, configured to process the second signal and the fourth signal, and obtain a response of the channel.
